(19) Europäisches Patentamt
European Patent Office
Office européen des brevets

(11) EP 3 613 720 B1

(12) # EUROPEAN PATENT SPECIFICATION

(45) Date of publication and mention of the grant of the patent:
**03.08.2022 Bulletin 2022/31**

(21) Application number: **18787341.9**

(22) Date of filing: **09.04.2018**

(51) International Patent Classification (IPC):
***C04B 41/64*** *(2006.01)* ***C08K 5/5419*** *(2006.01)*
***C08L 83/04*** *(2006.01)* ***C09D 5/02*** *(2006.01)*
***C09D 7/63*** *(2018.01)* ***C09D 183/04*** *(2006.01)*
***C09K 3/18*** *(2006.01)*

(52) Cooperative Patent Classification (CPC):
(C-Sets available)
**C04B 41/009; C04B 41/4922; C04B 41/64; C09D 183/04; C09K 3/18** (Cont.)

(86) International application number:
**PCT/JP2018/014925**

(87) International publication number:
**WO 2018/193899 (25.10.2018 Gazette 2018/43)**

(54) **WATER ABSORPTION PREVENTING MATERIAL FOR INORGANIC POROUS MATERIAL, METHOD FOR MODIFYING CONCRETE, AND CONCRETE**

WASSERABSORPTIONSVERHINDERNDES MATERIAL FÜR ANORGANISCHES PORÖSES MATERIAL, VERFAHREN ZUR MODIFIZIERUNG VON BETON UND BETON

MATÉRIAU DE PRÉVENTION DE L'ABSORPTION D'EAU POUR MATÉRIAU POREUX INORGANIQUE, PROCÉDÉ DE MODIFICATION DE BÉTON, ET BÉTON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.04.2017 JP 2017083468**

(43) Date of publication of application:
**26.02.2020 Bulletin 2020/09**

(73) Proprietors:
- **Dow Toray Co., Ltd.**
  **Shinagawa-ku**
  **Tokyo 1408617 (JP)**
- **Dow Silicones Corporation**
  **Midland, MI 48686-0994 (US)**

(72) Inventors:
- **KOJIMA, Kazuhiko**
  **Shinagawa-ku**
  **Tokyo 1408617 (JP)**
- **MORI, Hideyuki**
  **Shinagawa-ku**
  **Tokyo 1408617 (JP)**
- **LECOMTE, Jean-Paul Henri**
  **7180 Seneffe (BE)**
- **MARTEAUX, Leon Andre**
  **7180 Seneffe (BE)**

(74) Representative: **Murgitroyd & Company**
**Murgitroyd House**
**165-169 Scotland Street**
**Glasgow G5 8PL (GB)**

(56) References cited:
**JP-A- 2004 501 853** **JP-A- 2004 502 017**
**JP-A- 2009 132 921** **JP-A- 2013 538 255**
**US-B1- 6 323 268**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 613 720 B1

(52) Cooperative Patent Classification (CPC): (Cont.)

C-Sets
**C04B 41/009, C04B 28/02;**
**C04B 41/4922, C04B 41/4961, C04B 41/502, C04B 2103/406;**
**C09D 183/04, C08K 5/5419, C08K 5/5419, C08L 71/02**

## Description

### TECHNICAL FIELD

The present invention relates to a water absorption preventing material, including: (A) an organoalkoxysilane having a medium to long chain monovalent hydrocarbon group, having an alkyl group; (B) a silicone resin having a medium to long chain monovalent hydrocarbon group, having an alkyl group; (C) an optional organosilicone having a reactive group, particularly having a reactive group capable of reacting with an alkoxysilyl group or silanol group; and (D) a combination of two nonionic surfactants with different HLB values, wherein the proportion of (A)/{(B)+(C)} is 4:1 to 250:1 as a weight ratio, and a total sum of the weight of components (A), (B), and (C) is 70.2 to 95.2 wt% of a total weight of the water absorption preventing material. Note that in the specification and claims, the word "alkyl" is used as a concept including a linear alkyl, branched alkyl, and cyclic alkyl, with any of these capable of being selected as desired.

### [BACKGROUND ART]

Methods for hydrophobizing the surface of the inorganic porous material and inhibiting the permeability of water into the porous material by applying a composition containing an organosilicon compound such as a silane compound and polysiloxane to an inorganic porous material such as a porous building material have conventionally been known. In this case, by percolating the organosilicon compound through the pores of the inorganic porous material and hydrophobizing the surface layer, degradation of the material can be suppressed, while suppressing dust deposition and mold formation to obtain the effect of being stain resistant. Exemplary inorganic porous materials include inorganic porous materials such as concrete, mortar, lightweight cellular concrete, and bricks.

It is widely known that organoalkoxysilanes are useful as water absorption preventing materials (i.e. water repellent materials) for such inorganic porous materials. An organic solvent type water repellent material with an organoalkoxysilane diluted with an organic solvent therein has been conventionally used as such a water absorption preventing material. Unfortunately, the organic solvent used as a diluent may put the human body at risk of toxicity or inflammation, in addition to potentially polluting the environment. As a countermeasure to this, water-based emulsion type water absorption preventing materials (in which an organoalkoxysilane is emulsified using water as a diluting agent) and solventless type water absorption preventing materials have been examined. As such a water absorption preventing material, an emulsion composition (see Patent Document 1) in which an alkyl alkoxysilane is emulsified using a nonionic surfactant having an HLB (hydrophilic-lipophilic balance) value of 4 to 15 and an emulsion composition (see Patent Document 2) in which a nonionic surfactant is used in combination with an anionic surfactant to emulsify an alkylalkoxysilane have been proposed.

Moreover, an emulsion composition (see Patent Document 3) in which an organoalkoxysilane, along with an organopolysiloxane having the specific structure, is emulsified using an anionic emulsifier has also been proposed.

Unfortunately, the application of the emulsion composition to a sufficient thickness problematically requires multiple applications or causes insufficient permeability into the porous substrate. To solve this problem, a creamy silane/siloxane-based emulsion having a total amount of organoalkoxysilane and organopolysiloxane of 60 to 90 wt% has been proposed (see Patent Document 4).

Patent Document 5 proposes a water absorption preventing material containing an alkylalkoxysilane and silica in order to improve the liquid dropping ability when applied to a substrate.

Patent Document 6 describes a water absorption preventing material containing an alkyl alkoxysilane and thixotropic agent.

Patent Document 7 discloses a creamy aqueous emulsion for water resistance treatment of concrete containing an alkyl alkoxysilane, a polyorganosiloxane, an emulsifier, and water.

Patent Document 8 discloses a composition rendering a treated surface water repellent comprising, among other things, a methylhydrogensiloxane polymer or copolymer and a volatile methyl siloxane or a cationic oil-in-water emulsion of an amino functional polydimethylsiloxane

Prior Art Documents

Patent Documents

Patent Document 1 : Japanese Unexamined Patent Application Publication No. H3-13195
Patent Document 2 : Japanese Unexamined Patent Application Publication No. H4-114979
Patent Document 3 : Japanese Unexamined Patent Application Publication No. H6-313167

Patent Document 4: Japanese Unexamined Patent Application Publication No. 2004-338980
Patent Document 5: Japanese Unexamined Patent Application Publication No. 2009-35704
Patent Document 6: Japanese Unexamined Patent Application Publication No. 2012-241100
Patent Document 7: Japanese Unexamined Patent Application Publication No. 2017-025181
Patent Document 8 : United States Patent No. 6232268

## SUMMARY OF THE INVENTION

Problems to be Solved by the Invention

However, there is still a need for a water absorption preventing material which can impart superior water resistance to inorganic porous materials compared with known water absorption preventing materials for inorganic porous materials as described above, in addition to having excellent storage stability.

The present invention provides a water absorption preventing material which is an organosilicon compound based composition that has excellent workability and storage stability and can impart excellent water resistance to an inorganic porous material (such as concrete, mortar, lightweight cellular concrete, and bricks) for extended periods of time.

Means for Solving the Problems

As a water absorption preventing material in order to solve the abovementioned problems, the present invention provides a water absorption preventing material for inorganic porous materials, including:

(A) an organoalkoxysilane having a monovalent hydrocarbon group with 4 to 20 carbon atoms, having an alkyl group;
(B) a silicone resin having a monovalent hydrocarbon group with 4 to 20 carbon atoms, having an alkyl group;
(C) an optional chain organopolysiloxane having a reactive group, specifically a reactive group which may react with an alkoxysilyl group and/or silanol group to form a bond; and
(D) two or more nonionic active agents having different HLB values,
wherein the proportion of the weight of component (A) to the sum of the weight of component (B) and the weight of component (C) is 4:1 to 250:1, while the proportion of the total sum of the weight of components (A), (B), and (C) is 70.2 to 95.2 wt% of the total weight of the water absorption preventing material.

The water absorption preventing material for inorganic porous materials according to the present invention includes:

(A) 70 to 95 wt% of an organoalkoxysilane represented by the general formula

$$R^1{}_aSi(OR^2) \qquad (4\text{-}a)$$

wherein $R^1$ is each independently a monovalent hydrocarbon group having 1 to 20 carbon atoms, with at least one $R^1$ being an alkyl group having 4 to 20 carbon atoms, $R^2$ is an alkyl group having 1 to 3 carbon atoms, and subscript a is 1 or 2;
(B) 0.2 to 10 wt% of silicone resin selected from the group consisting of MQ resin, MTQ resin, MDQ resin, MDTQ resin, and T resin having an alkyl group with 4 to 20 carbon atoms; and
(C) 0 to 5 wt% of an organosilicone represented by the following general formula:

[Formula 1]

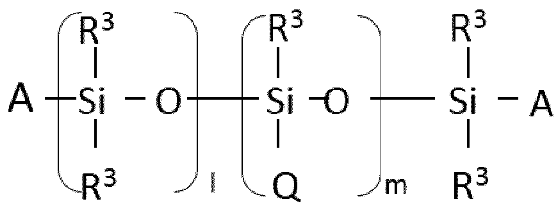

wherein $R^3$ is each independently an alkyl group having 1 to 20 carbon atoms, Q is a group bonded to a silicon

atom and selected from: an amino group, an amide group, a carboxyl group, an epoxy group, a hydroxyl group, and a group containing a hydroxyl group or alkoxy group, A is a group selected from $R^3$, and Q, subscript l is 0 to 500, and subscript m is 0 to 20, wherein one of l and m is not 0; and

(D) 0.1 to 6 wt% of a surfactant containing a nonionic surfactant with an HLB value of 12 or less, along with a nonionic surfactant with an HLB value of 15 or more,

wherein the proportion of the weight of component (A) to the sum of the weight of component (B) and the weight of component (C)} is 4:1 to 250:1 , while the proportion of the total sum of the weight of components (A), (B), and (C) is preferably 70.2 to 95.2 wt% of the total weight of the water absorption preventing material.

Component (A) is preferably an organoalkoxysilane represented by the general formula

$R^1{}_aSi(OR^2)$ (4-a)

wherein $R^1$ is each independently an alkyl group having 6 to 18 carbon atoms, $R^2$ is an alkyl group having 2 carbon atoms, and subscript a is 1.

Component (C) is preferably an organosilicone represented by the following general formula (C-2)

[Formula 3]

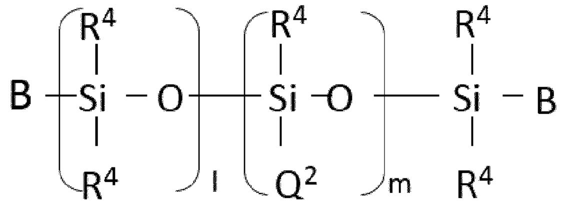

(C-2)

wherein $R^4$ is each independently an alkyl group having 1 to 20 carbon atoms, with one or more of $R^4$ being alkyl groups having 6 to 20 carbon atoms, and Q2 represented by the following general formula:

[Formula 4]

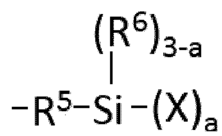

wherein $R^5$ is an alkylene group having 1 to 5 carbon atoms, $R^6$ is an alkyl group having 1 to 5 carbon atoms, X is an alkoxy group having 1 to 5 carbon atoms, and subscript a is an integer of 2 or 3,

B is a group selected from $R^4$ and $Q^2$, subscript l is 0 to 500, and subscript m is 1 to 20.

Component (C) is preferably an organosilicone represented by the following general formula (C-3), instead of the abovementioned organosilicone of formula (C-2),.

[Formula 5]

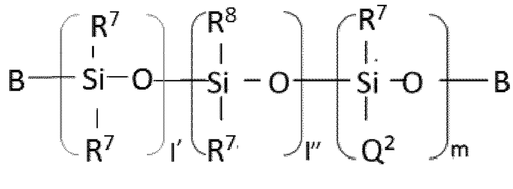

(C – 3)

wherein $R^7$ is a methyl group, and $Q^2$ is represented by the following general formula:

[Formula 6]

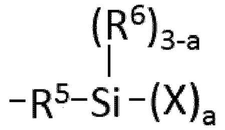

wherein $R^5$ is an alkylene group having 1 to 5 carbon atoms, $R^6$ is an alkyl group having 1 to 5 carbon atoms, X is an alkoxy group having 1 to 5 carbon atoms, and subscript a is an integer of 2 or 3,
B is a group selected from $R^7$, $R^8$, and $Q^2$, subscript l’ is 0 to 500, subscript l" is 1 to 500, and m is 1 to 20, provided that the sum of l’, l" and m is 2 to 500.

The number average molecular weight of the silicone resin having an alkyl group with 4 to 20 carbon atoms, preferably 6 to 18 carbon atoms, in component (B) of the water absorption preventing material for inorganic porous materials according to the present invention is preferably within the range of 2000 to 10000. The number average molecular weight of the silicone resin can be measured by gel permeation chromatography (GPC), etc.

The silicone resin having an alkyl group with 4 to 20 carbon atoms in component (B) of the water absorption preventing material for inorganic porous materials according to the present invention is preferably a reaction product obtained by reacting a silicone resin having a hydroxyl group and an organoalkoxysilane having an alkyl group with 4 to 20 carbon atoms or a hydrolyzed condensate thereof under condensation reaction conditions, specifically a reaction product obtained by the condensation reaction between: an MQ resin composed of $M^{Me}$ units represented by $(CH_3)_3SiO_{1/2}$; Q units represented by $SiO_{4/2}$; and a hydroxyl group (OH), wherein the proportion of $M^{Me}/Q$ is within the range of 1/9 to 9/1; and an organoalkoxysilane represented by

$R^{21}{}_aSi(OR^{22})$ $_{(4-a)}$

wherein $R^{21}$ is independently an alkyl group having 6 to 18 carbon atoms, $R^{22}$ is each independently an alkyl group having 1 or 2 carbon atom(s), and subscript a is an integer of 1 to 3,
or a hydrolyzed condensate thereof.

The product obtained from this reaction is a mixture of complicated components having various chemical structures, making it difficult to identify products by their chemical structures.

In one preferred aspect according to the present invention, in the abovementioned formula $R^{21}{}_aSi(OR^{22})_{4-a}$, $R^{21}$ is an alkyl group having 6 to 18 carbon atoms, and subscript a is 1.

In one preferred aspect according to the present invention, the nonionic surfactant with an HLB value of 12 or less and the nonionic surfactant with an HLB value of 15 or more, which serve as component (D), are each selected from a polyoxyethylene alkyl ether surfactant.

In one more preferred aspect according to the present invention, the water absorption preventing material for inorganic porous materials is a composition in the form of an emulsion, further including water as component (E1) in addition to components (A) to (D). Moreover, the present invention may include an organic solvent as component (E2). Further, the present invention may include one or more thickeners.

When the water absorption preventing material for inorganic porous materials according to the present invention includes water as component (E) in the form of an emulsion, the particle diameter of the emulsion is preferably 100 to 2000 nm.

The viscosity of the abovementioned emulsion at 25°C is preferably 3500 to 100000 mPas.

The present invention further provides a method for modifying concrete, the method including the step of forming a silicone based percolated coating film on a concrete surface layer part by coating or recoating the abovementioned water absorption preventing material for inorganic porous materials according to the present invention on a concrete surface.

The present invention further provides concrete with the water absorption preventing material for inorganic porous materials applied to the surface thereof.

Effects of the Invention

The water absorption preventing material for inorganic porous materials according to the present invention has favorable storage stability, while the application of the water absorption preventing material according to the present invention to inorganic porous materials makes it possible to impart favorable water absorption protection properties to the surface of inorganic porous materials. Moreover, the water absorption preventing material according to the present

invention exhibits favorable workability when applied to the surface of inorganic porous materials.

Brief Description of the Drawings

In FIG. 1, the photograph on the left side of FIG. 1 is a photograph illustrating the state of the surface water resistance of concrete when emulsion A1 according to an example is applied to the surface, while the photograph on the right side of FIG. 1 is a photograph illustrating the state of the surface water resistance of concrete when emulsion A2 according to a comparative example is applied to the surface.

Mode for Carrying Out the Invention

Each component forming the water absorption preventing material for inorganic porous materials according to the present invention will hereinafter be described in further detail.

1. Component (A)

Component (A) is an organoalkoxysilane having a medium to long chain monovalent hydrocarbon group, having an alkyl group, represented by the following general formula:

$$R^1{}_aSi(OR^2)_{(4-a)}$$

$R^1$ is each independently a monovalent hydrocarbon group having 1 to 20 carbon atoms, preferably a monovalent hydrocarbon group having 6 to 18 carbon atoms, provided that at least one $R^1$ is an alkyl group having 4 to 20 carbon atoms, preferably an alkyl group having 6 to 18 carbon atoms. Furthermore, all $R^1$ are particularly preferably an alkyl group having 6 to 18 carbon atoms. Here, exemplary monovalent hydrocarbon groups include linear or branched substituted or unsubstituted alkyl groups, substituted or unsubstituted cycloalkyl groups, substituted or unsubstituted aryl groups, and substituted or unsubstituted aralkyl groups. Exemplary substituents which may be possessed by these groups include halogen groups such as fluorine and chlorine, while exemplary substituents of cycloalkyl groups, aryl groups, and aralkyl groups include linear or branched alkyl groups in addition to halogen groups. Exemplary alkyl groups having 4 to 20 carbon atoms and alkyl groups having 6 to 18 carbon atoms include a linear alkyl group, a branched alkyl group, a cycloalkyl group, and a cycloalkyl group substituted with a linear or branched alkyl group, with a linear or branched alkyl group particularly preferable. Exemplary monovalent hydrocarbon groups having 1 to 20 carbon atoms include: alkyl groups such as methyl groups, ethyl, n-propyl groups, isopropyl groups, n-butyl groups, isobutyl groups, sec-butyl groups, tert-butyl groups, pentyl groups, n-hexyl groups, heptyl groups, 2-ethylhexyl groups, octyl groups, 2,2,4-trimethylpentyl groups, dodecyl groups, hexadecyl groups, and octadecyl groups; aryl groups such as phenyl groups, tolyl groups, xylyl groups, and naphthyl groups; aralkyl groups such as benzyl groups and phenethyl groups; substituted alkyl groups such as fluoromethyl groups, 3,3,3-trifluoropropyl groups, 3,3,4,4,5,5,5-heptafluoropentyl groups, and difluoromonochloropropyl groups. While not limited thereto, exemplary alkyl groups having 4 to 20 carbon atoms include n-butyl groups, isobutyl groups, sec-butyl groups, tert-butyl groups, pentyl groups, n-hexyl groups, heptyl groups, 2-ethylhexyl groups, octyl groups, dodecyl groups, hexadecyl groups, and octadecyl groups. While not limited thereto, exemplary alkyl groups having 6 to 18 carbon atoms include n-hexyl groups, heptyl groups, 2-ethylhexyl groups, octyl groups, dodecyl groups, hexadecyl groups, and octadecyl groups. At least one $R^1$ in the above formula is an alkyl group having 4 to 20 carbon atoms, preferably 6 to 18 carbon atoms, in which case the water resistance imparted to the inorganic porous material is increased when the water absorption preventing material for inorganic porous materials according to the present invention is used.

In the above formula, $R^2$ represents an alkyl group having 1 to 3 carbon atoms. Specific examples of $R^2$ include methyl, ethyl, n-propyl, and isopropyl groups, with a methyl group and an ethyl group being preferable. Because the permeability of the organoalkoxysilane into inorganic porous materials is favorable, $R^2$ is particularly preferably an ethyl group.

In the formula, subscript a represents 1 or 2. Subscript a is further preferably 1. If subscript a is 1, the durability of water resistance of inorganic porous materials is improved when the water absorption preventing material for inorganic porous materials according to the present invention is used.

In the formula, if subscript a is 1, $R^1$ is a linear or branched alkyl group having 4 to 20 carbon atoms, preferably a linear or branched alkyl group having 6 to 18 carbon atoms, while if subscript a is 2, one or two of $R^1$ is a linear or branched alkyl group having 4 to 20 carbon atoms, preferably 6 to 18 carbon atoms. These alkyl groups are particularly preferably n-octyl or hexyl.

A particularly preferable organoalkoxysilane used as component (A) is represented by the general formula:

$$R^1_aSi(OR^2)_{4-a}$$

wherein $R^1$ is each independently an alkyl group having 6 to 18 carbon atoms, $R^2$ is an alkyl group having 2 carbon atoms, and subscript a is 1.

The alkyl group having 6 to 18 carbon atoms and the alkyl group having 2 carbon atoms are as described above. Particularly preferable organoalkoxysilanes are octyltriethoxysilane, decyltriethoxysilane, and dodecyltriethoxysilane, especially preferably octyltriethoxysilane.

As component (A), one organoalkoxysilane may be used alone, or two or more organoalkoxysilanes may be combined and used as required.

2. Component (B)

Component (B) is a silicone resin selected from the group consisting of MQ resin, MTQ resin, MDQ resin, MDTQ resin, and T resin, having an alkyl group with 4 to 20 carbon atoms, preferably 6 to 18 carbon atoms. Component (B) is preferably an MQ resin having an alkyl group with 4 to 20 carbon atoms, more preferably an MQ resin having an alkyl group with 6 to 18 carbon atoms, and most preferably an MQ resin having an alkyl group with 8 to 12 carbon atoms.

The silicone resin having an alkyl group according to the present invention is an alkyl modified silicone resin in which an alkyl group having 4 to 20 carbon atoms, preferably 6 to 18 carbon atoms, is bonded to the silicone resin. Silicone resins are materials known in the art. The silicone resin is represented by the average unit formula: $R^1_aSiO_{(4-a)/2}$. In the formula, $R^1$ is a substituted or unsubstituted monovalent hydrocarbon group or alkoxy group, wherein at least 80 mol% thereof is a monovalent hydrocarbon group. Specific examples of monovalent hydrocarbon groups include: alkyl groups such as methyl groups, ethyl groups, propyl groups, butyl groups, pentyl groups, isopropyl groups, isobutyl groups, cyclopentyl groups, and cyclohexyl groups; alkenyl groups such as vinyl groups, allyl groups, and hexenyl groups; aryl groups such as phenyl groups and naphthyl groups; aralkyl groups such as benzyl groups and 1-phenylethyl groups; halogenated alkyl groups such as chloromethyl groups, 3-chloropropyl groups, 3,3,3-trifluoropropyl groups, and nonafluorobutyl ethyl groups; halogenated aryl groups such as 4-chlorophenyl groups 3,5-dichlorophenyl groups, and 3,5-difluorophenyl groups; and halogenated alkyl group substituted aryl groups such as 4-chloromethylphenyl groups and 4-trifluoromethylphenyl groups. Exemplary alkoxy groups include methoxy groups, ethoxy groups, and propoxy groups, with methoxy groups particularly preferable. a is a number from 0.75 to 2.5. Note that the silicone resin used in the present invention refers to an organosilicone containing trifunctional units represented by the formula: $R^1SiO_{3/2}$ wherein $R^1$ is the same as described above and/or tetrafunctional units (Q units) represented by the formula: $SiO_{4/2}$, wherein exemplary silicone resins include: a silicone resin (MQ resin) consisting of siloxane units (M units) represented by the formula: $R^1_3SiO_{1/2}$ and siloxane units represented by the formula: $SiO_{4/2}$; a silicone resin (MTQ resin) consisting of siloxane units represented by the formula: $R^1_3SiO_{1/2}$, siloxane units represented by the formula: $R^1SiO_{3/2}$, and siloxane units represented by the formula: $SiO_{4/2}$; a silicone resin (MDQ resin) consisting of siloxane units represented by the formula: $R^1_3SiO_{1/2}$, siloxane units (D units) represented by the formula: $R^1_2SiO_{2/2}$, and siloxane units represented by the formula: $SiO_{4/2}$; a silicone resin (MDTQ resin) consisting of siloxane units represented by the formula: $R^1_3SiO_{1/2}$, siloxane units represented by the formula: $R^1_2SiO_{2/2}$, siloxane units represented by the formula: $R^1SiO_{3/2}$, and siloxane units represented by the formula: $SiO_{4/2}$; and a silicone resin (T resin) consisting only of siloxane units represented by the formula: $R^1SiO_{3/2}$. An MTQ resin represented by the average composition formula: $(R^8_3SiO_{1/2})_b(SiO_{4/2})_c$, or an MTQ resin represented by the average composition formula: $(R^8_3SiO_{1/2})_d(R^8SiO_{3/2})_e(SiO_{4/2})_f(R^9O_{1/2})_g$ are preferable. In the formula, $R^8$ is a substituted or unsubstituted monovalent hydrocarbon group, with specific examples thereof including those that are the same as the monovalent hydrocarbon groups in $R^1$. $R^9$ is an alkyl group, with examples thereof including a methyl group, ethyl group, and propyl group. Note that the alkoxy group represented by the formula: $(R^9O_{1/2})$ is bonded to a silicon atom. b/c and d/f are within the range of 0.2 to 1.5, preferably within the range of 0.5 to 1.2. e/f is within the range of 0.05 to 0.2, while g/f is within the range of 0.05 to 0.6. The number average molecular weight of such silicone resins measured by GPC, etc. is preferably within the range of 1,000 to 10,000, more preferably within the range of 2,000 to 10,000, and particularly preferably within the range of 2500 to 6,000.

Component (B) according to the present invention is an alkyl modified silicone resin obtained by adding, to the silicone resin, an alkyl group having 4 to 20 carbon atoms, preferably 6 to 18 carbon atoms. Any method can be used as the method for introducing an alkyl group having 4 to 20 carbon atoms into the silicone resin. However, while not limited thereto, examples thereof may include: a method for directly synthesizing silicone resin by the condensation reaction of an alkyltrialkoxysilane having an alkyl group with 4 to 20 carbon atoms using an acid catalyst; a method for synthesizing silicone resin by a known method and introducing an alkyl group having 4 to 20 carbon atoms into the silicone resin by combining with a hydrolyzable organosilicon compound having an alkyl group with 4 to 20 carbon atoms, for example, an alkyltrialkoxysilane, together with other raw materials, upon producing the silicone resin; a method for introducing an alkyl group having 4 to 20 carbon atoms into the silicone resin by reacting with a hydrolyzable organosilicon compound having an alkyl group with 4 to 20 carbon atoms under condensation reaction conditions; etc.

Specific examples of the method for introducing an alkyl group into the silicone resin by reacting a hydrolyzable organosilicon compound having an alkyl group under condensation reaction conditions include: an MQ resin composed of $M^{Me}$ units represented by $(CH_3)_3SiO_{1/2}$, Q units represented by $SiO_{4/2}$, and a hydroxyl group (OH), wherein the proportion of $M^{Me}$/Q is within the range of 1/9 to 9/1; and an organoalkoxysilane represented by

$$R^{21}{}_aSi(OR^{22}) \qquad (4\text{-}a)$$

wherein $R^{21}$ is independently an alkyl group having 4 to 20 carbon atoms, particularly preferably an alkyl group having 6 to 18 carbon atoms, $R^{22}$ is independently an alkyl group having 1 or 2 carbon atom(s), and a is an integer of 1 to 3. The organoalkoxysilane is particularly preferably octyltrimethoxysilane, octyltriethoxysilane, decyltrimethoxysilane, decyltriethoxysilane, dodecyltrimethoxysilane, and dodecyltriethoxysilane, especially preferably octyltriethoxysilane. The reaction product obtained by this reaction can be used as component (B) according to the present invention. However, when an organoalkoxysilane is excessively used for the number of moles of OH groups of the silicone resin in this reaction, the reaction product may be a reaction mixture containing an alkyl modified silicone resin (with an alkyl group introduced into the silicone resin via a siloxane bond) and a hydrolysis product of an organoalkoxysilane and/or a condensation product thereof. In such case, the alkyl modified silicone resin may be used as component (B) according to the present invention without being isolated from the reaction mixture.

The amount of the monovalent hydrocarbon group having 6 to 18 carbon atoms, preferably the alkyl group having 6 to 18 carbon atoms, which is introduced into the silicone resin, particularly MQ resin, is preferably 1 to 10 mass% with respect to the mass of the entire silicone resin into which the alkyl group has been introduced.

The reaction between the silicone resin (specifically, the MQ resin) and the organosilane of the above formula: $R^{21}{}_aSi(OR^{22})_{4-a}$ may be excessively carried out using organosilane under hydrolysis and condensation reaction conditions for the number of moles of OH groups contained in the silicone resin, after which the entire reaction mixture may be used as a mixture containing component (B) upon removing the volatile component without isolating the alkyl modified silicone resin or without removing the volatile component. In this case, the organosilane excessively used for the OH of the silicone resin is incorporated into the amount of component (A).

3. Component (C)

The organosilicone of component (C) is a chain organopolysiloxane having functional groups which can react with components (A) and/or (B) to form a bond, and is also a component which imparts water resistance to the surface of the inorganic porous material. The organopolysiloxane of component (C) is not particularly limited as long as the object of the present invention can be achieved. The organopolysiloxane contains: an alkyl group having 1 to 20 carbon atoms; and an amino group, a carboxyl group, an amide group, an epoxy group, a group containing a hydroxyl group or alkoxy group including an alcoholic hydroxyl group (bonded to a carbon atom), which are bonded to a silicon atom; and further preferably contains groups represented by any of the following general formulae (C-1) to (C-4).

[Formula 7]

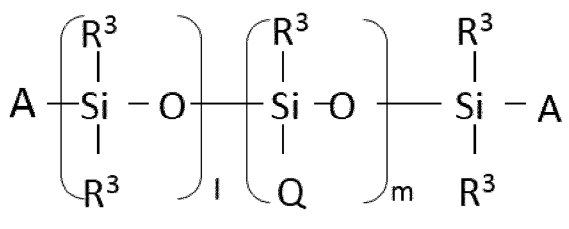

(C-1)

In formula (C-1), $R^3$ is each independently an alkyl group having 1 to 20 carbon atoms, for example, a methyl, ethyl, or propyl group, particularly preferably a methyl group, Q is a group bonded to a silicon atom and selected from: an amino group, an amide group, a carboxyl group, an epoxy group, a hydroxyl group, and a group containing a hydroxyl group or alkoxy group, A is a group selected from $R^3$ and Q, l is 0 to 500, and m is 0 to 20, wherein one of l and m is not 0).

Subscript l is more preferably 0 to 350, further preferably 0 to 250, and most preferably 0 to 150. Subscript m is more preferably 0 to 15, further preferably 0 to 10. Moreover, the total of l and m is preferably 1 to 500, further preferably 1 to 350, and even further preferably 1 to 250. This is because the permeability of component (C) into the inorganic

porous material is not reduced by setting the total of l and m to be 500 or less. Preferable values of these l and m are also applied to the following formulae (C-3) to (C-4) unless otherwise indicated.

[Formula 9]

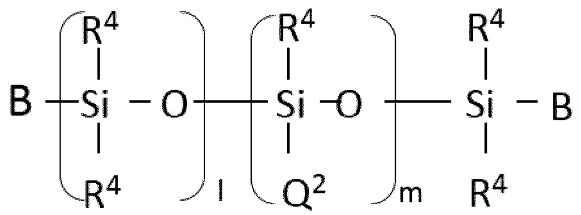

(C-3)

wherein $R^4$ is each independently an alkyl group having 1 to 20 carbon atoms, for example, a methyl, ethyl, or propyl group, particularly preferably a methyl group, wherein one or more of $R^4$ are alkyl groups having 6 to 20 carbon atoms, with $Q^2$ represented by the following general formula:

[Formula 10]

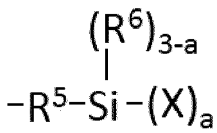

wherein $R^5$ is an alkylene group having 1 to 5 carbon atoms, for example, an ethylene or propylene group, $R^6$ is an alkyl group having 1 to 5 carbon atoms, for example, a methyl, ethyl, or propyl group, particularly preferably a methyl group, X is an alkoxy group having 1 to 5 carbon atoms, for example, a methoxy or ethoxy group, and subscript a is an integer of 2 or 3).

B is a group selected from $R^4$ and $Q^2$, l is 0 to 500, and m is 1 to 20.

Note that $Q^2$ is bonded to Si of the main chain by $R^5$ in the above formula.

[Formula 11]

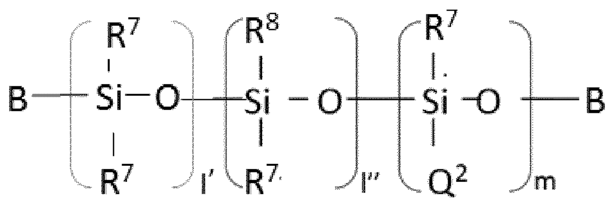

wherein $R^7$, $R^8$ and B are methyl groups , for example, n-hexyl, n-octyl, n-decyl, n-dodecyl, 2-ethylhexyl, 2,4,4-trimethylpentyl group, and $Q^2$ is represented by the following general formula:

[Formula 12]

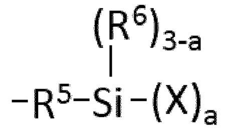

wherein $R^5$ is an alkylene group having 1 to 5 carbon atoms, for example, ethylene or propylene, $R^6$ is an alkyl group having 1 to 5 carbon atoms, for example, a methyl, ethyl, or propyl group, particularly preferably a methyl group, X is an alkoxy group having 1 to 5 carbon atoms, for example, a methoxy or ethoxy group, preferably an ethoxy group, and a is an integer of 2 or 3,

B is a group selected from $R^7$, $R^8$, and $Q^2$, l is 0 to 500, l' is 1 to 500, and m is 1 to 20, provided that the sum of l', l" and me is 2 to 500.

Note that $Q^2$ is bonded to Si of the main chain by $R^5$ in the above formula.

The chain organopolysiloxane used as component (C) according to the present invention particularly preferably has a group in which Q is an alkylalkoxysilyl group or alkoxysilyl group bonded to a silicon atom of the main chain of the organopolysiloxane via a silalkylene group represented by the formula (C-3) or (C-4). Specific examples of preferable chain organopolysiloxanes include those represented by the following general formula:

$$(CH)_3SiO[(CH_3)_2SiO]_l[(CH_3)RSiO]_{l'}[(CH_3)XSiO]_mSi(CH_3)_3$$

wherein R independently represents an alkyl group having 6 to 20 carbon atoms, preferably 8 to 16 carbon atoms, for example, a hexyl, octyl, decyl, dodecyl, tetradecyl, or octadecyl group, particularly preferably an n-octyl group; X represents a C2H4-Si(OCH3)3 group or a C2H4-Si (OC2H5)3 group, particularly preferably a $C_2H_4$-Si $(OC_2H_5)_3$ group; l is 0 to 500, preferably 0 to 350, further preferably 0 to 250, particularly preferably 0 to 150; l is 0 to 500, preferably 0 to 350, further preferably 0 to 250, particularly preferably 0 to 150; l' is 1 to 500, preferably 1 to 350, further preferably 1 to 250, particularly preferably 1 to 150; m is 1 to 20, preferably 1 to 15, further preferably 1 to 10; and the total of l, l', and m is preferably 2 to 500, further preferably 2 to 350, further preferably 2 to 250. Note that each siloxane unit in the above formula may be arranged in any manner except for a trimethylsilyl on both terminals, and can be, for example, randomly arranged.

Further specific examples of such a chain organopolysiloxane may include an organopolysiloxane represented by the following formula:

$$(CH_3)_3SiO[(CH_3)_2SiO]_{3\ to\ 15}[(CH_3)RSiO]_{1\ to\ 5}[(CH_3)XSiO]_{1\ to\ 5}Si(CH_3)_3(R=C_8H_{17}, X=C_2H_4\text{-}Si(OC_2H_5)_3)$$

while particularly preferable examples may include a chain organopolysiloxane represented by the following formula:

$$(CH_3)_3SiO[(CH_3)_2SiO]_7[(CH_3)RSiO]_2[(CH_3)XSiO]_2Si(CH_3)_3(R=C_8H_{17}, X=C_2H_4\text{-}\ Si(OC_2H_5)_3).$$

The chain organopolysiloxanes of formulae (C-1) to (C-4) can be produced by known methods. The production method may include, for example, a method of the hydrosilylation reaction between a chain organohydrogenpolysiloxane (which may have a silicon-bonded hydrogen atom on a molecular chain side chain and have a silanol group at a terminal) and a reactive precursor such as an alkene having a carbon-carbon double bond at the molecular chain terminal, such that the chain organopolysiloxane can be easily produced by this method.

4. Component (D)

Component (D) is a combination of a surfactant containing a nonionic surfactant with an HLB value of 12 or less and a nonionic surfactant with an HLB value of 15 or more. Use of this combination makes it possible to obtain a composition in which components (A) to (C) are uniformly dispersed or emulsified in an aqueous medium.

As the nonionic surfactant, any nonionic surfactant with an HLB value of 12 or less, and any nonionic surfactant with an HLB value of 15 or more, is used in combination. While not particularly limited thereto, examples of the chemical

structure of the nonionic surfactant may include polyoxyalkylene modified silicones, polyoxyalkylene ethers, polyoxyalkylene alkyl ethers, polyoxyalkylene fatty acid esters, polyoxyalkylene fatty acid diesters, polyoxyalkylene resin acid esters, polyoxyalkylenealkylphenols, polyoxyalkylene alkylphenyl ethers, polyoxyalkylene alkyl esters, sorbitan fatty acid esters, polyoxyalkylene sorbitan fatty acid esters, polyoxyalkylene glycerol fatty acid esters, sucrose fatty acid esters, fatty acid alkanolamides, alkyl glucosides, polyoxyalkylene fatty acid bis-phenyl ethers, etc. In the present invention, a surfactant with an HLB value of 12 or less, preferably 11 or less, is used in combination with a surfactant with an HLB of 15 or more, preferably 16 or more. More specifically, a nonionic surfactant with an HLB value of 8 or more and12 or less, preferably 9 or more and 11 or less, is preferably used in combination with a nonionic surfactant with an HLB value of 15 or more and 19.5 or less, preferably 16 or more and 18 or less. HLB is Griffin's HLB and is determined by the following formula:

$$\text{HLB} = (\text{molecular weight of hydrophilic groups/overall molecular weight}) \times (100/5) = \{\text{hydrophilic substrate quantity}/(\text{hydrophobic substrate quantity} + \text{hydrophilic substrate quantity})\} \times (100/5).$$

It was found that the stability of water absorption preventing materials can be improved by combining these two nonionic surfactants with different HLB values.

Note that as a surfactant with an HLB value of 12 or less, two or more surfactants with an HLB value of 12 or less may be used in combination. Moreover, as a surfactant with an HLB value of 15 or more, two or more surfactants with an HLB value of 15 or less may be used in combination.

Particularly preferable examples of the nonionic surfactant with an HLB value of 12 or less and the nonionic surfactant with an HLB value of 15 or more include polyoxyethylene alkyl ethers, for example, polyoxyethylene alkyl ethers and polyoxy(ethylene/propylene)alkyl ethers, further specific examples thereof include polyoxyalkylene lauryl ether, specifically, polyoxydiethylene lauryl ether, polyoxyethylene cetyl ether, polyoxyethylene stearyl ether, polyoxyethylene oleyl ether, polyoxyethylene myristyl ether, polyoxyethylene octyldodecyl ether, polyoxyethylene 2-propylheptyl ether, polyoxyethylene alkylene alkyl ether, polyoxyethylene distyrenated phenyl ether, polyoxyethylene tribenzyl phenyl ether, polyoxyethylene tribenzyl phenyl ether, polyoxyalkylene branched decyl ether, polyoxyethylene tridecyl ether, polyoxyethylene styrenated phenyl ether, polyoxyethylene isodecyl ether, polyoxyalkylene oleylcetyl ether, etc., while not limited thereto. Among these, polyoxyethylene lauryl ether and/or polyoxyethylene 2-propyl heptyl ether are preferable.

While not particularly limited thereto, the amount ratio of the nonionic surfactant with an HLB value of 12 or less to the nonionic surfactant with an HLB value of 15 or more according to the present invention is, as solid content, within the range of 1:100 to 100:1, preferably within the range of 1:5 to 5:1, and further preferably within the range of 1:3 to 3:1, with these nonionic surfactants capable of being used in combination within these ranges.

The water absorption preventing material for inorganic porous materials according to the present invention may be used in combination with a surfactant selected from the group consisting of a cationic surfactant and an amphoteric surfactant, in addition to the abovementioned two nonionic surfactants having different HLB values. The cationic surfactant and the amphoteric surfactant which can be used in the present invention are not particularly limited, with exemplary cationic surfactants including quaternary ammonium salts such as alkyl trimethyl ammonium salts and dialkyl dimethyl ammonium salts. Exemplary amphoteric surfactants include imidazoline type, amidobetaine type, alkylbetaine type, alkylamidobetaine type, alkylsulfobetaine type, amidosulfobetaine type, hydroxysulfobetaine type, carbobetaine type, phosphobetaine type, aminocarboxylic acid type, and amido amino acid type amphoteric surfactants.

Thickening agent

In order to improve workability along with the stability of the composition, the water absorption preventing material for inorganic porous materials according to the present invention preferably further contains one or more thickening agents in addition to components (A) to (D) described above. The addition amount of the thickener is arbitrary but when used, it is preferable to appropriately select the amount such that the total composition is within the viscosity range described below, i.e. 3500 to 100000 mPas at 25°C.

While not particularly limited thereto, exemplary preferable thickeners used in the present invention include alkyl modified polyacrylic acid based polymers. Examples thereof include alkyl acrylate copolymers, (meth)acrylate/alkyl (meth) acrylate copolymers, and alkyl acrylate/alkyl methacrylate/polyoxyethylene stearyl ether copolymers.

Specific examples thereof include an alkyl acrylate/alkyl methacrylate/polyoxyethylene (20) stearyl ether copolymer, alkyl acrylate/alkyl methacrylate/polyoxyethylene (25) lauryl ether copolymer, alkyl acrylate/alkyl methacrylate/polyoxyethylene (25) behenyl ether copolymer, acrylate/alkyl methacrylate copolymer, acrylate/vinyl neodecanoate

copolymer, (alkyl acrylate/octylacrylamide) copolymer, (acrylates/steareth-20 itaconate) copolymer, (acrylates/ceteth-20 itaconate) copolymer, and (acrylates/aminoacrylate/C10-30 alkyl PEG-20 itaconate) copolymer. Commercially available products include the following thickener ACULYN™ 33 (available from Dow Chemical Japan, Ltd.)

Likewise, exemplary thickeners which can be used include commercially available products including: ACULYN 33, ACULYN 88, ACULYN 22, ACULYN 28, and ACULYN 38 (all available from Dow Chemical Japan, Ltd.); Carbopol ETD2020, Carbopol Ultrez 21, Carbopol Ultrez 20, PEMULEN TR-1, and PEMULEN TR-2 (all available from Lubrizol Advanced Materials); and STRUCTURE 2001, STRUCTURE XL, and STRUCTURE CEL (all available from AkzoNobel); etc.

5. Other components

Other additives may be used as required for the water absorption preventing material for inorganic porous materials according to the present invention. While not limited thereto, examples of such additives include one or more additives selected from pH adjusters, rust inhibitors, freezing and thawing stabilizers, dispersants, antisettling agents, thickeners, antifoaming agents, thixotropic agents, fungicides, preservatives, antisagging agents, antistatic agents, conductive agents, flame retardants, and fillers.

6. Form of the water absorption preventing material for inorganic porous materials

The form of the water absorption preventing material for inorganic porous materials according to the present invention (hereinafter, also simply referred to as the composition according to the present invention or the water absorption preventing material according to the present invention) is not particularly limited, but can be in the form of a solventless composition, the form of a solution containing a solvent, or the form of an emulsion containing water. The emulsion can be in the form of an emulsion (E1) containing water and no solvent, or an emulsion containing both water and a solvent, in addition to components (A) to (D). Among these, in terms of ease of application to the inorganic porous material and environmental compatibility, the water absorption preventing material according to the present invention is preferably in the form of an emulsion containing water, particularly in the form of an emulsion containing water and no common organic solvent. Alternatively, the composition according to the present invention can be in the form of a solution (E2) containing an organic solvent in addition to components (A) to (D). While not particularly limited thereto, the organic solvent may include, for example, an organic solvent as a solvent. The type and blending amount of the organic solvent is adjusted taking the coating workability, etc. into consideration. Exemplary organic solvents which can be used include: aromatic hydrocarbon based solvents such as toluene, xylene, and benzene; aliphatic hydrocarbon based solvents such as heptane, hexane, octane, and isoparaffin; ester based solvents such as ethyl acetate and isobutyl acetate; ether based solvents such as diisopropyl ether and1,4-dioxane; chlorinated aliphatic hydrocarbon based solvents such as trichloroethylene, perchloroethylene, and methylene chloride; and solvent volatile oils; etc., with aromatic hydrocarbon based solvents such as toluene, xylene, and benzene particularly preferable.

When the composition according to the present invention is an emulsion, it may be in the form of any emulsion such as an O/W (oil-in-water) emulsion and a W/O (water-in-oil) emulsion, with the form of the O/W emulsion preferable.

The composition according to the present invention preferably contains components (A), (B), and (D), with or without component (C), such that with respect to the total amount of the composition according to the present invention, component (A) is 70 to 95 wt%, component (B) is 0.2 to 10 wt%, component (C) is 0 to 5 wt%, preferably 0.2 to 5 wt%, and component (D) is 0.1 to 6 wt%. Further, the total amount of components (A), (B), and (C) is 70.2 to 95.2 wt% of the overall composition. If the total amount combined with component (D) is less than 100%, the composition according to the present invention can contain an additive such as a thickener, solvent, and water in an amount equal to 100 wt% minus the total amount.

In addition, in the composition according to the present invention, regarding components (A), (B), and (C), (A)/{(B)+(C)} is 4:1 to 250:1, further preferably 10:1 to 100:1 or 15:1 to 50:1, as a weight ratio. Using the proportions of components (A), (B), and (C) in the abovementioned ratio, a composition is obtained which provides a coating film that is easily applied to the inorganic porous material, has favorable storage stability, and exhibits excellent surface water resistance.

Moreover, in addition to components (A) to (D), when water is added to the composition according to the present invention to form an emulsion, the use of components (A) to (C) in an amount at the mass ratio described above makes it possible to obtain the effects such that the composition becomes creamy, workability upon vertically applying the composition is favorable, and water resistance can be imparted to the inorganic porous material with a small number of applications. Further, the addition of a thickener to the composition according to the present invention as necessary makes it possible to adjust the workability when the composition is coated onto a substrate.

When the composition according to the present invention is prepared as a composition of an emulsion, the mixture containing components (A) to (D) and water can be emulsified and prepared using a known stirring and mixing

apparatus or emulsifier, for example, a homomixer, paddle mixer, Henschel mixer, homodisper, colloid mixer, propeller stirrer, homogenizer, inline type continuous emulsifier, ultrasonic emulsifier, vacuum kneader, colloid mill, or combination mixer.

When the composition according to the present invention is an emulsion, the particle diameter of the emulsion is preferably 100 to 2000 nm, more preferably 120 to 1800 nm, and further preferably 150 to 1500 nm. When the particle diameter is 2000 nm or more, the stability of the composition decreases, while when the particle diameter is 100 nm or less, the emulsion viscosity dramatically increases. Therefore, the workability when applied to the inorganic porous material, etc. decreases. The particle diameter of the emulsion can be measured using a laser scattering submicron particle analyzer.

The viscosity of the composition according to the present invention at 25°C is preferably 3500 to 100000 mPas, more preferably 4000 to 80000 mPas, and further preferably 4500 to 60000 mPas. As described above, the viscosity can be adjusted using a thickener as required. By setting the viscosity of the composition to 3500 mPas or more, the composition tends not to easily drop when applied vertically. Therefore, the workability when applying to the inorganic porous material is improved. By setting the viscosity to be 100000 mPas or less, the composition tends to be uniformly applied to the surface of the inorganic porous material.

The composition according to the present invention can be used as a water absorption preventing material applied to the surface of an inorganic porous material such as concrete, mortar, lightweight cellular concrete, and brick. The composition according to the present invention can be applied to inorganic porous materials by any method, for example, roller coating, brush coating, or spray coating. While not particularly limited thereto, the amount of the composition according to the present invention applied to these inorganic porous materials is generally 400 $g/m^2$ or less, particularly preferably 100 to 250 $g/m^2$. The target amount of the composition according to the present invention may be applied to the surface of the inorganic porous material just once or may be recoated multiple times.

200 $g/m^2$ of the composition according to the present invention can permeate to a percolation depth of 2.5 mm or more when applied to concrete or mortar at a water/binder ratio (water/cement ratio) of 50%. In a further suitable aspect, permeability of 3 mm or more is possible. Then, in a more suitable aspect, permeability of 3.5 mm or more is possible. In this way, the composition according to the present invention has excellent permeability into concrete. However, when the composition is used for dense concrete, this permeability height is particularly advantageous. The density of concrete can be represented by the water/cement ratio, wherein the dense concrete (wherein the weight ratio of water/cement is 0.5 or less) is used in civil engineering structures. The composition according to the present invention has excellent permeability into such civil engineering structure concrete. When the composition is particularly an aqueous emulsion, the composition is in the form of a cream. Because the composition is unlikely to flow off even when the composition is applied to the vertical surface of the concrete, it is advantageous as a water absorption preventing material for use in the vertical surface of concrete of a civil engineering structures which have already been installed. Exemplary structures formed from inorganic porous materials in which the water absorption preventing material according to the present invention is suitably used include: a cast-in-place structure; a product/member of pre-cast concrete produced at a factory or yard; etc.

Further, excellent water absorption prevention properties can be imparted to the concrete surface by applying the water absorption preventing material according to the present invention even to the surface of concrete that, while dense when the concrete is cast, became sparse due to deterioration over time.

When the water absorption preventing material for a porous material according to the present invention is percolated from the surface of the porous material, the water absorption preventing material exhibits the effect of being less susceptible to deterioration due to ultraviolet rays and retaining performance as a water absorption preventing material for extended periods of time. As a result, a structure having an inorganic porous material applied to the surface of the water absorption preventing material for porous materials according to the present invention as an exterior coating can exhibit water absorption prevention properties (water resistance) for extended periods of time while maintaining a favorable appearance.

Examples

While the present invention is hereinafter described in detail based on the examples, these examples do not limit the scope of the invention described in the claims. In the examples, "parts" indicating the amount of material represent parts by weight.

(1) Average particle diameter of the emulsion

The average particle diameter of the emulsion was measured using a laser scattering submicron particle analyzer (type COULTER N4 manufactured by Coulter Electronics, Inc.)

(2) Viscosity of the emulsion

The viscosity at 25°C was measured using an E-type viscometer CONTROLLER RC-100, manufactured by Toki Sangyo Co., Ltd., with a rotor 1° 3 × R14 and a rotation speed of 10 rpm.

(3) Stability of the emulsion

100 g of the emulsion was placed in a 100 cc glass bottle and left to stand at 50°C, after which the period until separation occurred was measured.

(4) Workability

A brush, etc. was used for application to the vertical surface of a concrete test sample, such that the application amount was 200 g/$m^2$, after which it was observed whether or not the emulsion dropped off like water droplets within three minutes after being applied, and it was determined that the workability was "favorable" if there was no dropping.

(5) Percolation depth

A 160 mm × 160 mm concrete test sample, in which the water absorption preventing material was applied at an amount of 200 g/$m^2$, was left to stand at room temperature for seven days, and then split into two sections, and then water was sprayed on the split surface, and the lengths of the portions (hydrophobic layers) which did not exhibit a coated color by water was measured at three locations, with the average value taken as the permeability depth.

(6) Surface water resistance

A 160 mm × 160 mm concrete test sample, in which the water absorption preventing material was applied at an amount of 200 g/$m^2$, was left to stand at room temperature for seven days, and then water droplets were dropped and a visual evaluation was made as to whether the water formed dewdrops or got wet and spread out on the concrete surface.

Synthesis of the octyl group-containing silicone resin A

The octyl group-containing silicone resin A according to the present invention was synthesized by mixing a xylene solution between an octyltriethoxysilane and an MQ resin (M/Q = 0.7, OH content: 3.0 mass%) of $M^{Me}$ units represented by $(CH_3)_3SiO_{1/2}$, Q units represented by $SiO_{4/2}$, and a hydroxyl group (OH), at a mass ratio of octyltriethoxysilane: MQ resin of 1:1, in addition to distilling xylene under reduced pressure.

Synthesis of the octyl group-containing silicone resin B

The octyl group-containing silicone resin B according to the present invention was synthesized via the condensation reaction of an octyltriethoxysilane under a hydrochloric acid catalyst. (Number average molecular weight of 2600 measured by GPC, along with a viscosity of 150 cp (25°C))

Production Example 1

0.59 parts polyoxyethylene (4 mol) lauryl ether (HLB = 9.8) and 0.83 parts of a 72% aqueous solution (HLB = 17.0) of polyoxyethylene (23 mol) lauryl ether were mixed until uniform, after which a portion of 15.26 parts water was added to the mixture and mixed until uniform. 80 parts of an octyltriethoxysilane, 1.75 parts octyl group-containing silicone resin A, and 1.5 parts organosilicone (alkylalkoxy siloxane C) represented by the following formula:

$$(CH_3)_3SiO[(CH_3)_2SiO]_7[(CH_3)RSiO]_2[(CH_3)XSiO]_2Si(CH_3)_3$$

wherein $R=C_8H_{17}$, $X=C_2H_4\text{-}Si(OC_2H_5)_3$
were added to the mixture and emulsified using a homodisper. The remaining portion of 15.26 parts water, 0.021 parts sodium hydrogen carbonate, and 0.05 parts preservative were added to the obtained emulsion and mixed until uniform to obtain an emulsion (A1). The particle diameter of the obtained emulsion was 1180 nm, while the emulsion viscosity was 9600 mPas at 25°C. The obtained emulsion was stable without separating for two months or longer at 50°C.

Production Example 2

3.15 parts polyoxyethylene (4 mol) lauryl ether (HLB = 9.8) and 5.151 parts of an 85% aqueous solution (HLB = 13.2) of polyoxyethylene (7 mol) 2-propyl heptyl ether were mixed until uniform, after which a portion of 20.56 parts water was added to the mixture and mixed until uniform. 56.375 parts octyltriethoxysilane, along with 13.125 parts octyl group-containing silicone resin B (number average molecular weight: 2600, viscosity: 150 cp) was added, after which the mixture was emulsified using a homodisper. The remaining portion of 20.56 parts water, 0.021 parts sodium hydrogen carbonate, 1.58 parts propylene glycol, and 0.05 parts preservative were added to the obtained emulsion and mixed until uniform to obtain an emulsion. The obtained emulsion was separated at 50°C after five days.

Production Example 3

An attempt was made to prepare an emulsion as in Production Example 2, except that 3.15 parts polyoxyethylene (4 mol) lauryl ether (HLB = 9.8) and 5.151 parts of an 85% aqueous solution (HLB = 13.2) of polyoxyethylene (7 mol) 2-propyl heptyl ether, which were used in Production Example 2, were changed to 1.5 parts of a polyoxyethylene-polyoxypropylene copolymer type nonionic emulsifier (EOPOEO copolymer) (HLB = 16.0) and 5.0 parts of a 40% aqueous solution of sodium alkanesulfonate. However, it was impossible to emulsify the composition and the emulsion was not obtained.

Production Example 4

An attempt was made to prepare an emulsion as in Production Example 2, except that 3.15 parts polyoxyethylene (4 mol) lauryl ether (HLB = 9.8) and 5.151 parts of an 85% aqueous solution (HLB = 13.2) of polyoxyethylene (7 mol) 2-propyl heptyl ether, which were used in Production Example 2, were changed to 2.353 parts of an 85% aqueous solution (HLB = 13.2) of polyoxyethylene (7 mol) 2-propyl heptyl ether and 2 parts of a polyoxyethylene-polyoxypropylene copolymer type nonionic emulsifier (EOPOEO copolymer) (HLB = 16.0). However, it was impossible to emulsify the composition and the emulsion was not obtained.

Production Example 5

An emulsion was prepared as in Production Example 2, except that 1 part bis (2-ethylhexyl) sodium sulfosuccinate was added to the emulsion prepared in Production Example 2. The obtained emulsion was separated at 50°C after five days.

Production Example 6

A portion of 17.45 parts water was added to 7.4 parts of an 85% aqueous solution (HLB = 13.2) of polyoxyethylene (7 mol) 2-propyl heptyl ether and mixed until uniform. 70 parts octyltriethoxysilane and 3.5 parts alkylalkoxy siloxane C were added, after which the mixture was emulsified using a homodisper. The remaining portion of 17.45 parts water, 0.021 parts sodium hydrogen carbonate, 1.58 parts propylene glycol, and 0.05 parts preservative were added to the obtained emulsion and mixed until uniform to obtain an emulsion. The obtained emulsion was separated at 50°C after two weeks.

Production Example 7

3.15 parts polyoxyethylene (4 mol) lauryl ether (HLB = 9.8) and 4.378 parts of a 72% aqueous solution (HLB = 17.0) of polyoxyethylene (23 mol) lauryl ether were mixed until uniform, after which a portion of 17.33 parts water was added to the mixture and mixed until uniform. 71.5 parts of an octyltriethoxysilane, along with 2 parts of an organosilicone (alkylalkoxy siloxane C') represented by the following formula:

$$(CH_3)_3SiO[(CH_3)RSiO]_{48.7}[(CH_3)XSiO]_{1.3}Si(CH_3)_3$$

wherein $R=C_{13}H_{27}$, $X=C_2H_4\text{-}Si(OC_2H_5)_3$,
was added to the mixture, after which the mixture was emulsified using a homodisper. The remaining portion of 17.33 parts water, 0.021 parts sodium hydrogen carbonate, 1.58 parts propylene glycol, and 0.05 parts preservative were added to the obtained emulsion and mixed until uniform to obtain an emulsion (A2). The particle diameter of the obtained emulsion was 600 nm, while the emulsion viscosity was 8700 mPas. The obtained emulsion was stable for two months or longer at 50°C.

The results of Production Examples 1 to 7 are summarized in the following Table 1. The emulsion (A1) of Production Example 1 in Table 1 is an example according to the present invention.

Table 1

| | Production Example 1 A1 | Production Example 2 | Production Example 3 | Production Example 4 | Production Example 5 | Production Example 6 | Production Example 7 A2 |
|---|---|---|---|---|---|---|---|
| Octyltriethoxysilane | 80 | 56.375 | 56.375 | 56.375 | 56.375 | 70.0 | 71.5 |
| Octyl group-containing silicone resin A | 1.75 | | | | | | |
| Octyl group-containing silicone resin B | | 13.125 | 13.125 | 13.125 | 13.125 | | |
| Alkylalkoxy siloxane C | 1.5 | | | | | 3.5 | |
| Alkylalkoxy siloxane C' | | | | | | | 2 |
| Polyoxyethylene (4 mol) lauryl ether (HLB = 9.8) | 0.59 | 3.15 | | | 3.15 | | 3.15 |
| Polyoxyethylene (23 mol) lauryl ether (HLB = 17.0) (72% aqueous solution) | 0.83 | | | | | | 4.378 |
| Polyoxyethylene (7 mol) 2-propylheptyl ether (85% aqueous solution) (HLB = 13.2) | | 5.151 | | 2.353 | 5.151 | 7.4 | |
| EOPOEO copolymer (HLB = 16) | | | 1.5 | 2 | | | |
| Sodium alkanesulfonate (40% aqueous solution) | | | 5 | | | | |
| Sodium bis(2-ethylhexyl) sulfosuccinate | | | | | 1 | | |
| Water | 15.26 | 20.56 | 22.35 | 24.50 | 21.13 | 17.45 | 17.33 |
| Propylene glycol | | 1.58 | 1.58 | 1.58 | | 1.58 | 1.58 |
| Sodium hydrogen carbonate | 0.021 | 0.021 | 0.021 | 0.021 | 0.021 | 0.021 | 0.021 |
| Preservative | 0.05 | 0.05 | 0.05 | 0.05 | 0.05 | 0.05 | 0.05 |
| Silicone content (%) | 83.25 | 69.5 | 69.5 | 69.5 | 69.5 | 73.5 | 73.5 |
| Particle diameter (nm) | 1180 | - | - | - | - | - | 600 |
| Emulsion stability at 50°C | Not separated for two months or longer | Separated after five days | Unable to be emulsified | Unable to be emulsified | Separated after five days | Separated after two weeks | Not separated for two months or longer |
| Emulsion viscosity (mPas) | 9600 | - | - | - | - | - | 8700 |

Table 1 indicates that emulsion A1 of Production Example 1 according to the present invention is a composition having favorable stability, while in Production Example 2 to 6 not according to the present invention, a stable emulsion cannot be obtained.

Next, test results evaluated for workability, percolation depth, and surface water resistance as described above for emulsion A1 of Production Example 1 according to the present invention and emulsion A2 of Production Example 7 not according to the present invention are indicated in Table 2 below.

Table 2

Table 2 (Comparison between Example 1 (Production Example 1) and Comparative Example (Production Example 7))

| | Example A1 | Comparative Example A2 |
|---|---|---|
| Workability | Favorable | Favorable |
| Percolation depth | 4.0 mm | 3.0 mm |
| Surface water resistance | Formed into a ball shape | Wetness spread |

Emulsion A1 according to the present invention had favorable workability when applied to concrete, the depth of percolation into concrete was also as large as 4.0 mm, and the surface water resistance (when water droplets were dropped on the surface of the concrete with emulsion A applied thereto) was also favorable. In contrast, while emulsion A2 of the comparative example not containing the component (component B described in the claims) according to the present invention exhibited favorable stability, the surface water resistance was inferior compared to emulsion A1. The photograph on the left side of FIG. 1 illustrates the state of surface water resistance using emulsion A1, while the photograph on the right side of FIG. 1 illustrates the state of surface water resistance using emulsion A2.

Production Example 8

0.66 parts polyoxyethylene (4 mol) lauryl ether (HLB = 9.8) and 0.92 parts of a 72% aqueous solution (HLB = 17.0) of polyoxyethylene (23 mol) lauryl ether were mixed until uniform, after which a portion of 5.53 parts water was added to the mixture and mixed until uniform. 82.7 parts octyltriethoxysilane and 9.19 parts octyl group-containing silicone resin B were added to the mixture, after which the mixture was emulsified using a homodisper. The remaining portion of 5.53 parts water, along with 0.99 parts ACULYN 33, was added to the obtained emulsion and mixed until uniform to obtain an emulsion (A3). (The composition is indicated in Table 3 below)

[Production Examples 9 to 11] Emulsions (A4 to A6) were prepared using a similar procedure to that of Production Example 8 except that the number of parts of the thickener (ACULYN 33) used was changed to the number of parts listed in Table 3.

Table 3

| | Production Example 8 A3 | Production Example 9 A4 | Production Example 10 A5 | Production Example 11 A6 |
|---|---|---|---|---|
| Octyltriethoxysilane | 82.7 | 83.1 | 83.3 | 83.4 |
| Octyl group-containing silicone resin B | 9.19 | 9.23 | 9.26 | 9.27 |
| Polyoxyethylene (4 mol) lauryl ether (HLB = 9.8) | 0.66 | 0.67 | 0.67 | 0.67 |
| Polyoxyethylene (23 mol) lauryl ether (HLB = 17.0) (72% aqueous solution) | 0.92 | 0.93 | 0.93 | 0.93 |
| ACULYN 33 | 0.99 | 0.5 | 0.25 | 0.1 |
| Water | 5.53 | 5.56 | 5.58 | 5.58 |
| Silicone content (%) | 91.89 | 92.33 | 92.56 | 92.67 |

Examples 2 to 5

Next, the test results evaluating workability, percolation depth, and surface water resistance as described above for the emulsions (A3 to A6) of Production Examples 8 to 11 according to the present invention are indicated in Table 4 below.

Table 4

| | Example 2 A3 | Example 3 A4 | Example 4 A5 | Example 5 A6 |
|---|---|---|---|---|
| Workability | Favorable | Favorable | Favorable | Favorable |
| Percolation depth | 8.0 mm | 7.0 mm | 6.0 mm | 6.0 mm |
| Surface water resistance | Formed into a ball shape | Formed into a ball shape | Formed into a ball shape | Formed into a ball shape |

The above results indicate that emulsions A1 and A3 to A6 containing components (A) to (D) according to the present invention have favorable storage stability and can impart excellent water resistance performance, that is, water absorption prevention performance, to the surface of the inorganic porous material.

## Claims

**1.** A water absorption preventing material for inorganic porous materials, comprising:

(A) 70 to 95 wt% of at least one organoalkoxysilane represented by the general formula

$R^1{}_aSi(OR^2)$ (4-a)

wherein $R^1$ is each independently a monovalent hydrocarbon group having 1 to 20 carbon atoms, with at least one $R^1$ being an alkyl group having 4 to 20 carbon atoms, $R^2$ is an alkyl group having 1 to 3 carbon atoms, and subscript a is 1 or 2;
(B) 0.2 to 10 wt% of silicone resin selected from the group consisting of: MQ resin, MTQ resin, MDQ resin, MDTQ resin, and T resin having an alkyl group with 4 to 20 carbon atoms;
(C) 0 to 5 wt% of an organosilicone represented by the following general formula:

[Formula 1]

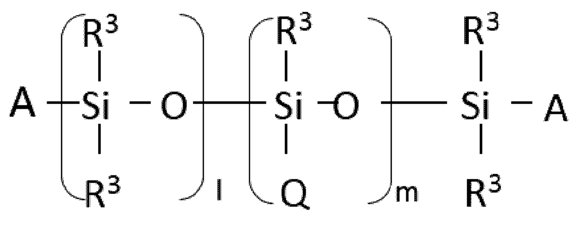

wherein $R^3$ is each independently an alkyl group having 1 to 20 carbon atoms; Q is a group bonded to a silicon atom and selected from: an amino group, an amide group, a carboxyl group, an epoxy group, a hydroxyl group, and a group containing a hydroxyl group or alkoxy group; A is a group selected from: $R^3$ and Q; subscript l is 0 to 500, and subscript m is 0 to 20, wherein one of l and m is not 0; and
(D) 0.1 to 6 wt% of a surfactant containing a nonionic surfactant with an HLB value of 12 or less, along with a nonionic surfactant with an HLB value of 15 or more;
wherein the proportion of the weight of component (A) to the sum of the weight of component(B) and the weight of component (C) is 4:1 to 250:1 , while the proportion of the total sum of the weight of components (A), (B), and (C) is 70.2 to 95.2 wt% of the total weight of the water absorption preventing material.

**2.** The water absorption preventing material for inorganic porous materials according to claim 1, wherein component (A) is an organoalkoxysilane represented by the general formula

$$R^1_aSi(OR^2) \quad (4\text{-}a)$$

wherein $R^1$ is each independently an alkyl group having 6 to 18 carbon atoms, $R^2$ is an alkyl group having 2 carbon atoms, and subscript a is 1.

**3.** The water absorption preventing material for inorganic porous materials according to claim 1 or 2, wherein component (C) is an organosilicone represented by the following general formula:

[Formula 3]

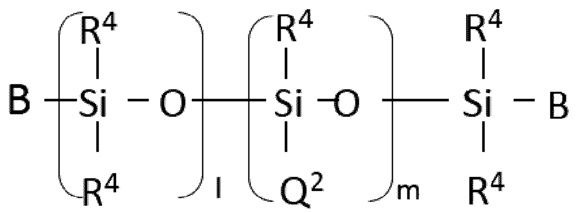

wherein $R^4$ is each independently an alkyl group having 1 to 20 carbon atoms, wherein one or more of $R^4$ are alkyl groups having 6 to 20 carbon atoms, with $Q^2$ represented by the following general formula:

[Formula 4]

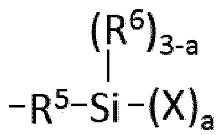

wherein $R^5$ is an alkylene group having 1 to 5 carbon atoms, $R^6$ is an alkyl group having 1 to 5 carbon atoms, X is an alkoxy group having 1 to 5 carbon atoms, and subscript a is an integer of 2 or 3;
B is a group selected from $R^4$ and $Q^2$, subscript l is 0 to 500, and subscript m is 1 to 20.

**4.** The water absorption preventing material for inorganic porous materials according to claim 1 or 2, wherein component (C) is an organosilicone represented by the following general formula:

[Formula 5]

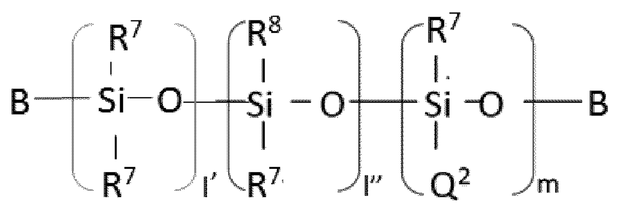

wherein $R^7$ is a methyl group, $R^8$ is an alkyl group having 6 to 20 carbon atoms, and $Q^2$ is represented by the following general formula:

[Formula 6]

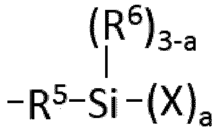

wherein $R^5$ is an alkylene group having 1 to 5 carbon atoms, $R^6$ is an alkyl group having 1 to 5 carbon atoms, X is an alkoxy group having 1 to 5 carbon atoms, and a is an integer of 2 or 3;
B is a group selected from $R^7$, $R^8$, and $Q^2$, l' is 0 to 500, l" is 1 to 500, m is 1 to 20, provided that the sum of l', l" and m is 2 to 500.

**5.** The water absorption preventing material for inorganic porous materials according to any one of claims 1 to 4, wherein the number average molecular weight of the silicone resin having an alkyl group with 4 to 20 carbon atoms in component (B) is within the range of 2000 to 10000.

**6.** The water absorption preventing material for inorganic porous materials according to any one of claims 1 to 4, wherein the silicone resin having an alkyl group with 4 to 20 carbon atoms in component (B) is a reaction product obtained by the condensation reaction between:

an MQ resin composed of $M^{Me}$ units represented by $(CH_3)_3SiO_{1/2}$, Q units represented by $SiO_{4/2}$, and a hydroxyl group (OH), wherein the proportion of $M^{Me}$/Q is within the range of 1/9 to 9/1; and
an organoalkoxysilane represented by

$$R^{21}{}_aSi(OR^{22}) \quad {}_{(4\text{-}a)}$$

wherein $R^{21}$ is independently an alkyl group having 6 to 18 carbon atoms, $R^{22}$ is independently an alkyl group having 1 or 2 carbon atom(s), and subscript a is an integer of 1 to 3, or
a hydrolyzed condensate thereof.

**7.** The water absorption preventing material for inorganic porous materials according to claim 6, wherein $R^{21}$ is an alkyl group having 6 to 18 carbon atoms and subscript a is 1.

**8.** The water absorption preventing material for inorganic porous materials according to any one of claims 1 to 7, wherein the nonionic surfactant with an HLB value of 12 or less and the nonionic surfactant with an HLB value of 15 or more, which serve as component (D), are each selected from a polyoxyethylene alkyl ether surfactant.

**9.** The water absorption preventing material for inorganic porous materials according to any one of claims 1 to 8, further comprising water as component (E1) in the form of an emulsion.

**10.** The water absorption preventing material for inorganic porous materials according to claim 9, wherein the particle diameter of the emulsion is 100 to 2000 nm.

**11.** The water absorption preventing material for inorganic porous materials according to any one of claims 1 to 8, further comprising an organic solvent as component (E2) in the form of a solution.

**12.** The water absorption preventing material for inorganic porous materials according to any one of claims 1 to 11, further comprising one or more thickeners.

**13.** A method for modifying concrete, comprising the step of forming a silicone based percolated coating film on a concrete surface layer part by coating or recoating the water absorption preventing material for inorganic porous materials according to any one of claims 1 to 12 on a concrete surface.

**14.** Concrete with the water absorption preventing material for inorganic porous materials according to any one of claims 1 to 12 applied to the surface thereof.

## Patentansprüche

1. Ein Material zur Verhinderung von Wasserabsorption für anorganische poröse Materialien, das Folgendes beinhaltet:

(A) zu 70 bis 95 Gew.-% mindestens ein Organoalkoxysilan, dargestellt durch die allgemeine Formel

$$R^1{}_aSi(OR^2)_{(4-a)},$$

wobei $R^1$ jeweils unabhängig eine einwertige Kohlenwasserstoffgruppe mit 1 bis 20 Kohlenstoffatomen ist, wobei mindestens ein $R^1$ eine Alkylgruppe mit 4 bis 20 Kohlenstoffatomen ist, $R^2$ eine Alkylgruppe mit 1 bis 3 Kohlenstoffatomen ist und das tiefgestellte Zeichen a 1 oder 2 ist;
(B) zu 0,2 bis 10 Gew.-% ein Silikonharz, ausgewählt aus der Gruppe, bestehend aus Folgendem: MQ-Harz, MTQ-Harz, MDQ-Harz, MDTQ-Harz und T-Harz mit einer Alkylgruppe mit 4 bis 20 Kohlenstoffatomen;
(C) zu 0 bis 5 Gew.-% eine Organosiliciumverbindung, dargestellt durch die folgende allgemeine Formel:

[Formel 1]

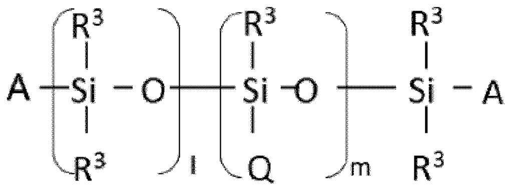

, wobei $R^3$ jeweils unabhängig eine Alkylgruppe mit 1 bis 20 Kohlenstoffatomen ist; Q eine Gruppe ist, die an ein Siliciumatom gebunden ist und aus Folgendem ausgewählt ist: einer Aminogruppe, einer Amidgruppe, einer Carboxylgruppe, einer Epoxygruppe, einer Hydroxylgruppe und einer Gruppe, die eine Hydroxylgruppe oder Alkoxygruppe enthält; A eine Gruppe ist, die aus Folgendem ausgewählt ist: $R^3$ und Q; das tiefgestellte Zeichen l 0 bis 500 ist und das tiefgestellte Zeichen m 0 bis 20 ist, wobei eines von l und m nicht 0 ist; und
(D) zu 0,1 bis 6 Gew.-% ein Tensid, das ein nichtionisches Tensid mit einem HLB-Wert von 12 oder weniger zusammen mit einem nichtionischen Tensid mit einem HLB-Wert von 15 oder mehr enthält;
wobei das Verhältnis des Gewichts der Komponente (A) zu der Summe des Gewichts der Komponente (B) und des Gewichts der Komponente (C) 4 : 1 bis 250 : 1 beträgt, während der Anteil der Gesamtsumme des Gewichts der Komponenten (A), (B) und (C) 70,2 bis 95,2 Gew.-% des Gesamtgewichts des Materials zur Verhinderung von Wasserabsorption beträgt.

2. Material zur Verhinderung von Wasserabsorption für anorganische poröse Materialien gemäß Anspruch 1, wobei die Komponente (A) ein Organoalkoxysilan ist, das durch die folgende allgemeine Formel dargestellt ist:

$$R^1{}_aSi(OR^2)_{(4-a)},$$

wobei $R^1$ jeweils unabhängig eine Alkylgruppe mit 6 bis 18 Kohlenstoffatomen ist, $R^2$ eine Alkylgruppe mit 2 Kohlenstoffatomen ist und das tiefgestellte Zeichen a 1 ist.

3. Material zur Verhinderung von Wasserabsorption für anorganische poröse Materialien gemäß Anspruch 1 oder 2, wobei die Komponente (C) eine Organosiliciumverbindung ist, die durch die folgende allgemeine Formel dargestellt ist:

[Formel 3]

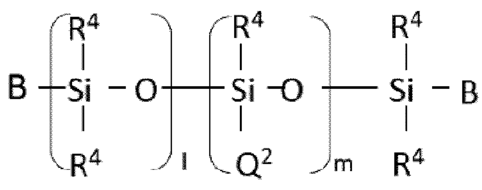

,

wobei $R^4$ jeweils unabhängig eine Alkylgruppe mit 1 bis 20 Kohlenstoffatomen ist, wobei eines oder mehrere von

$R^4$ Alkylgruppen mit 6 bis 20 Kohlenstoffatomen sind, wobei $Q^2$ durch die folgende allgemeine Formel dargestellt ist:

[Formel 4]

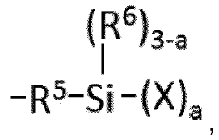

wobei $R^5$ eine Alkylengruppe mit 1 bis 5 Kohlenstoffatomen ist, $R^6$ eine Alkylgruppe mit 1 bis 5 Kohlenstoffatomen ist, X eine Alkoxygruppe mit 1 bis 5 Kohlenstoffatomen ist und das tiefgestellte Zeichen a eine ganze Zahl von 2 oder 3 ist;
B eine Gruppe ist, die aus $R^4$ und $Q^2$ ausgewählt ist, das tiefgestellte Zeichen l 0 bis 500 ist und das tiefgestellte Zeichen m 1 bis 20 ist.

**4.** Material zur Verhinderung von Wasserabsorption für anorganische poröse Materialien gemäß Anspruch 1 oder 2, wobei die Komponente (C) eine Organosiliciumverbindung ist, die durch die folgende allgemeine Formel dargestellt ist:

[Formel 5]

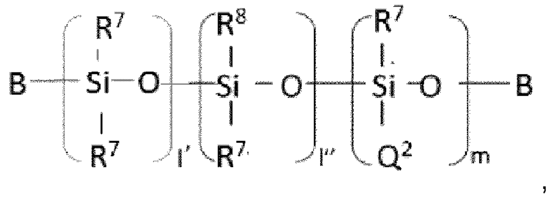

wobei $R^7$ eine Methylgruppe ist, $R^8$ eine Alkylgruppe mit 6 bis 20 Kohlenstoffatomen ist und $Q^2$ durch die folgende allgemeine Formel dargestellt ist:

[Formel 6]

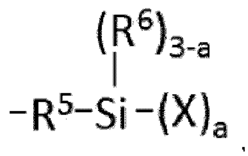

wobei $R^5$ eine Alkylengruppe mit 1 bis 5 Kohlenstoffatomen ist, $R^6$ eine Alkylgruppe mit 1 bis 5 Kohlenstoffatomen ist, X eine Alkoxygruppe mit 1 bis 5 Kohlenstoffatomen ist und a eine ganze Zahl von 2 oder 3 ist;
B eine Gruppe ist, die aus $R^7$, $R^8$ und $Q^2$ ausgewählt ist, l' 0 bis 500 ist, l" 1 bis 500 ist, m 1 bis 20 ist, vorausgesetzt, dass die Summe von l', l" und m 2 bis 500 ist.

**5.** Material zur Verhinderung von Wasserabsorption für anorganische poröse Materialien gemäß einem der Ansprüche 1 bis 4, wobei das zahlenmittlere Molekulargewicht des Silikonharzes mit einer Alkylgruppe mit 4 bis 20 Kohlenstoffatomen in der Komponente (B) in dem Bereich von 2 000 bis 10 000 liegt.

**6.** Material zur Verhinderung von Wasserabsorption für anorganische poröse Materialien gemäß einem der Ansprüche 1 bis 4, wobei das Silikonharz mit einer Alkylgruppe mit 4 bis 20 Kohlenstoffatomen in der Komponente (B) ein Reaktionsprodukt ist, das durch die Kondensationsreaktion zwischen Folgendem erhalten wird:

einem MQ-Harz, das aus $M^{Me}$-Einheiten, die durch $(CH_3)_3SiO_{1/2}$ dargestellt sind, Q-Einheiten, die durch $SiO_{4/2}$ dargestellt werden, und einer Hydroxylgruppe (OH) zusammengesetzt ist, wobei das Verhältnis von $M^{Me}/Q$ in dem Bereich von 1/9 bis 9/1 liegt; und
einem Organoalkoxysilan, das durch Folgendes dargestellt ist:

$$R^{21}{}_aSi(OR^{22})_{(4-a)},$$

wobei $R^{21}$ unabhängig eine Alkylgruppe mit 6 bis 18 Kohlenstoffatomen ist, $R^{22}$ unabhängig eine Alkylgruppe mit 1 oder 2 Kohlenstoffatom(en) ist und das tiefgestellte Zeichen a eine ganze Zahl von 1 bis 3 ist, oder einem hydrolysierten Kondensat davon.

**7.** Material zur Verhinderung von Wasserabsorption für anorganische poröse Materialien gemäß Anspruch 6, wobei $R^{21}$ eine Alkylgruppe mit 6 bis 18 Kohlenstoffatomen ist und das tiefgestellte Zeichen a 1 ist.

**8.** Material zur Verhinderung von Wasserabsorption für anorganische poröse Materialien gemäß einem der Ansprüche 1 bis 7, wobei das nichtionische Tensid mit einem HLB-Wert von 12 oder weniger und das nichtionische Tensid mit einem HLB-Wert von 15 oder mehr, die als Komponente (D) dienen, jeweils aus einem Polyoxyethylenalkylether-Tensid ausgewählt sind.

**9.** Material zur Verhinderung von Wasserabsorption für anorganische poröse Materialien gemäß einem der Ansprüche 1 bis 8, das ferner Wasser als Komponente (E1) in Form einer Emulsion beinhaltet.

**10.** Material zur Verhinderung von Wasserabsorption für anorganische poröse Materialien gemäß Anspruch 9, wobei der Teilchendurchmesser der Emulsion 100 bis 2 000 nm beträgt.

**11.** Material zur Verhinderung von Wasserabsorption für anorganische poröse Materialien gemäß einem der Ansprüche 1 bis 8, das ferner ein organisches Lösungsmittel als Komponente (E2) in Form einer Lösung beinhaltet.

**12.** Material zur Verhinderung von Wasserabsorption für anorganische poröse Materialien gemäß einem der Ansprüche 1 bis 11, das ferner ein oder mehrere Verdickungsmittel beinhaltet.

**13.** Ein Verfahren zum Modifizieren von Beton, das den Schritt des Bildens eines perkolierten Beschichtungsfilms auf Silikonbasis auf einem Teil der Betonoberflächenschicht durch Beschichten oder Wiederbeschichten des Materials zur Verhinderung von Wasserabsorption für anorganische poröse Materialien gemäß einem der Ansprüche 1 bis 12 auf eine Betonoberfläche beinhaltet.

**14.** Beton, auf dessen Oberfläche das Material zur Verhinderung von Wasserabsorption für anorganische poröse Materialien gemäß einem der Ansprüche 1 bis 12 aufgetragen ist.

## Revendications

**1.** Un matériau de prévention d’absorption d’eau pour des matériaux poreux inorganiques, comprenant :

(A) de 70 à 95 % en poids d’au moins un organoalcoxysilane représenté par la formule générale

$$R^1{}_aSi(OR^2)_{(4-a)}$$

dans laquelle $R^1$ est chacun indépendamment un groupe hydrocarboné monovalent ayant de 1 à 20 atomes de carbone, au moins un $R^1$ étant un groupe alkyle ayant de 4 à 20 atomes de carbone, $R^2$ est un groupe alkyle ayant de 1 à 3 atomes de carbone, et l’indice a vaut 1 ou 2 ;
(B) de 0,2 à 10 % en poids de résine de silicone sélectionnée dans le groupe constitué : d’une résine MQ, d’une résine MTQ, d’une résine MDQ, d’une résine MDTQ, et d’une résine T ayant un groupe alkyle avec de 4 à 20 atomes de carbone ;
(C) de 0 à 5 % en poids d’une organosilicone représentée par la formule générale suivante :

[Formule 1]

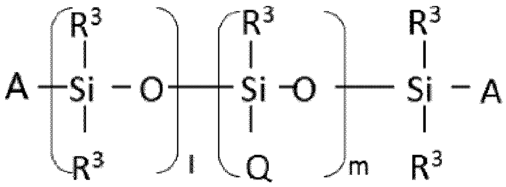

dans laquelle $R^3$ est chacun indépendamment un groupe alkyle ayant de 1 à 20 atomes de carbone ; Q est un groupe lié à un atome de silicium et sélectionné parmi : un groupe amino, un groupe amide, un groupe carboxyle, un groupe époxy, un groupe hydroxyle, et un groupe contenant un groupe hydroxyle ou groupe alcoxy ; A est un groupe sélectionné parmi : $R^3$ et Q ; l'indice I vaut de 0 à 500, et l'indice m vaut de 0 à 20, dans laquelle un indice parmi I et m ne vaut pas 0 ; et

(D) de 0,1 à 6 % en poids d'un tensioactif contenant un tensioactif non ionique avec une valeur de HLB de 12 ou moins, ainsi qu'un tensioactif non ionique avec une valeur de HLB de 15 ou plus ;

dans lequel la proportion du poids du constituant (A) à la somme du poids du constituant (B) et du poids du constituant (C) va de 4/1 à 250/1, tandis que la proportion de la somme totale du poids des constituants (A), (B), et (C) va de 70,2 à 95,2 % en poids du poids total du matériau de prévention d'absorption d'eau.

**2.** Le matériau de prévention d'absorption d'eau pour des matériaux poreux inorganiques selon la revendication 1, dans lequel le constituant (A) est un organoalcoxysilane représenté par la formule générale

$R^1{}_aSi(OR^2)$ (4-a)

dans laquelle $R^1$ est chacun indépendamment un groupe alkyle ayant de 6 à 18 atomes de carbone, $R^2$ est un groupe alkyle ayant 2 atomes de carbone, et l'indice a vaut 1.

**3.** Le matériau de prévention d'absorption d'eau pour des matériaux poreux inorganiques selon la revendication 1 ou la revendication 2, dans lequel le constituant (C) est une organosilicone représentée par la formule générale suivante :

[Formule 3]

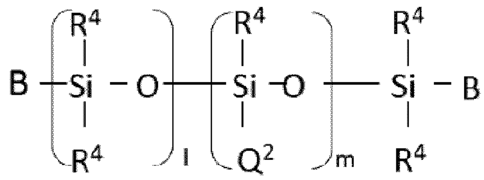

dans laquelle $R^4$ est chacun indépendamment un groupe alkyle ayant de 1 à 20 atomes de carbone, dans laquelle un ou plusieurs $R^4$ parmi les $R^4$ sont des groupes alkyle ayant de 6 à 20 atomes de carbone, $Q^2$ étant représenté par la formule générale suivante :

[Formule 4]

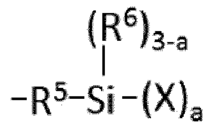

dans laquelle $R^5$ est un groupe alkylène ayant de 1 à 5 atomes de carbone, $R^6$ est un groupe alkyle ayant de 1 à 5 atomes de carbone, X est un groupe alcoxy ayant de 1 à 5 atomes de carbone, et l'indice a est un nombre entier de 2 ou 3 ;

B est un groupe sélectionné parmi $R^4$ et $Q^2$, l'indice I vaut de 0 à 500, et l'indice m vaut de 1 à 20.

**4.** Le matériau de prévention d'absorption d'eau pour des matériaux poreux inorganiques selon la revendication 1 ou

la revendication 2, dans lequel le constituant (C) est une organosilicone représentée par la formule générale suivante :

[Formule 5]

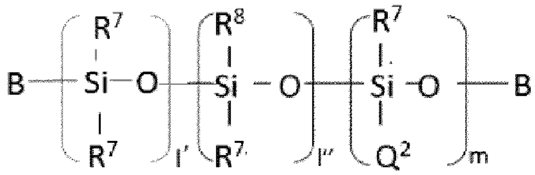

dans laquelle $R^7$ est un groupe méthyle, $R^8$ est un groupe alkyle ayant de 6 à 20 atomes de carbone, et $Q^2$ est représenté par la formule générale suivante :

[Formule 6]

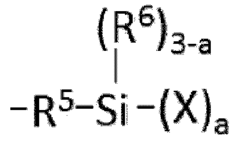

dans laquelle $R^5$ est un groupe alkylène ayant de 1 à 5 atomes de carbone, $R^6$ est un groupe alkyle ayant de 1 à 5 atomes de carbone, X est un groupe alcoxy ayant de 1 à 5 atomes de carbone, et a est un nombre entier de 2 ou 3 ; B est un groupe sélectionné parmi $R^7$, $R^8$, et $Q^2$, l' vaut de 0 à 500, l" vaut de 1 à 500, m vaut de 1 à 20, à condition que la somme de l', l" et m vaille de 2 à 500.

5. Le matériau de prévention d'absorption d'eau pour des matériaux poreux inorganiques selon l'une quelconque des revendications 1 à 4, dans lequel la masse moléculaire moyenne en nombre de la résine de silicone ayant un groupe alkyle avec de 4 à 20 atomes de carbone dans le constituant (B) se trouve au sein de l'intervalle allant de 2 000 à 10 000.

6. Le matériau de prévention d'absorption d'eau pour des matériaux poreux inorganiques selon l'une quelconque des revendications 1 à 4, dans lequel la résine de silicone ayant un groupe alkyle avec de 4 à 20 atomes de carbone dans le constituant (B) est un produit de réaction obtenu par la réaction de condensation entre :

une résine MQ composée d'unités $M^{Me}$ représentées par $(CH_3)_3SiO_{1/2}$, d'unités Q représentées par $SiO_{4/2}$, et d'un groupe hydroxyle (OH), dans lequel la proportion de $M^{Me}/Q$ se trouve au sein de l'intervalle allant de 1/9 à 9/1 ; et
un organoalcoxysilane représenté par

$$R^{21}{}_aSi(OR^{22})_{(4-a)}$$

dans laquelle $R^{21}$ est indépendamment un groupe alkyle ayant de 6 à 18 atomes de carbone, $R^{22}$ est indépendamment un groupe alkyle ayant 1 ou 2 atome(s) de carbone, et l'indice a est un nombre entier de 1 à 3, ou un condensat hydrolysé de celui-ci.

7. Le matériau de prévention d'absorption d'eau pour des matériaux poreux inorganiques selon la revendication 6, dans lequel $R^{21}$ est un groupe alkyle ayant de 6 à 18 atomes de carbone et l'indice a vaut 1.

8. Le matériau de prévention d'absorption d'eau pour des matériaux poreux inorganiques selon l'une quelconque des revendications 1 à 7, dans lequel le tensioactif non ionique avec une valeur de HLB de 12 ou moins et le tensioactif non ionique avec une valeur de HLB de 15 ou plus, lesquels font office de constituant (D), sont sélectionnés chacun parmi un tensioactif éther polyoxyéthylène alkylique.

9. Le matériau de prévention d'absorption d'eau pour des matériaux poreux inorganiques selon l'une quelconque des revendications 1 à 8, comprenant en outre de l'eau comme constituant (E1) sous la forme d'une émulsion.

**10.** Le matériau de prévention d'absorption d'eau pour des matériaux poreux inorganiques selon la revendication 9, dans lequel le diamètre de particule de l'émulsion va de 100 à 2 000 nm.

**11.** Le matériau de prévention d'absorption d'eau pour des matériaux poreux inorganiques selon l'une quelconque des revendications 1 à 8, comprenant en outre un solvant organique comme constituant (E2) sous la forme d'une solution.

**12.** Le matériau de prévention d'absorption d'eau pour des matériaux poreux inorganiques selon l'une quelconque des revendications 1 à 11, comprenant en outre un ou plusieurs épaississants.

**13.** Un procédé pour modifier du béton, comprenant l'étape consistant à former une pellicule d'enduction percolée à base de silicone sur une partie de couche de surface de béton par enduction ou enduction à nouveau du matériau de prévention d'absorption d'eau pour des matériaux poreux inorganiques selon l'une quelconque des revendications 1 à 12 sur une surface de béton.

**14.** Béton avec le matériau de prévention d'absorption d'eau pour des matériaux poreux inorganiques selon l'une quelconque des revendications 1 à 12 appliqué sur la surface de celui-ci.

[FIG. 1]

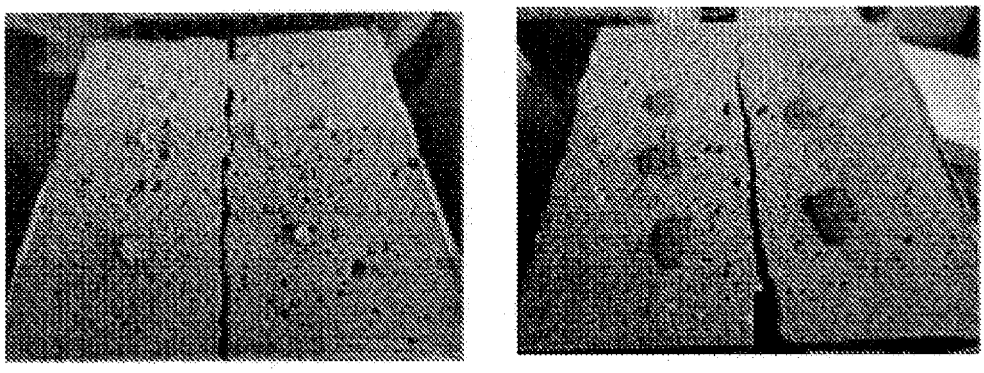

ESP-249-11-  ESP-230-#1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H313195 A
- JP H4114979 A
- JP H6313167 A
- JP 2004338980 A
- JP 2009035704 A
- JP 2012241100 A
- JP 2017025181 A
- US 6232268 B